# EUROPEAN PATENT SPECIFICATION

(11) **EP 1 714 067 B1**
(45) Date of publication and mention of the grant of the patent: **23.01.2008**
(21) Application number: 05704644.3
(22) Date of filing: 27.01.2005
(51) Int. Cl.: F16L 37/092

(54) **EXTERNALLY CYLINDRICAL MEMBER FOR FASTENING IN AN APERTURE**
AUSSEN ZYLINDRISCHES GLIED ZUR BEFESTIGUNG IN EINER ÖFFNUNG
ELEMENT CYLINDRIQUE EXTERNE A FIXER DANS UNE OUVERTURE

(30) Priority: 30.01.2004 NO 20040437
(43) Date of publication of application: 25.10.2006
(73) Proprietor: Kongsberg Automotive AS, 3602 Kongsberg (NO)
(72) Inventor: BERGE, Jostein, N-2817 Gjovik (NO); DALE, Kristoffer, N-2608 Lillehammer (NO); SANGRO, Jan Erik, N-2319 Hamar (NO)
(74) Representative: Briddes, Sam
(86) International application number: PCT/NO2005/000033
(87) International publication number: WO 2005/073612

(56) References cited:
- EP-A1- 0 859 088
- US-A- 3 400 950
- US-A- 4 229 027
- US-A- 5 067 751

## Description

The present invention relates to an an externally cylindrical member for fastening in an aperture in a receiving part, into which the cylindrical member is inserted, whereby at least one expansion member having at least one external gripping edge is situated in a circumferential groove in the cylindrical member, said groove having a bottom surface with an increasing diameter in the direction of insertion of the cylindrical member.

### Prior art.

There are known for instance brake components for utility vehicles, such as valves, having housings of metal, in which tube couplings are screwed into threaded holes. Plastic is also used in stead of metal for the housings, but threads in plastic are not considered to be sufficiently safe for instance for brake tube couplings. It is, therefore, usual to use thread inserts which are pressed into the plastic. Inserts of this type, however, entails the drawback that the force for pressing in is so large that it may damage the valve housing of plastic. Moreover, the pull-out force will mainly correspond to the pressing-in force.

GB 1 170 857 describes a device for coupling together two tubes, where the first tube has external rings, which may be split, seated in a respective conical groove having an increasing diameter in the direction of insertion. The rings are adapted to penetrate into the wall of the second tube which is entered onto the firste tube. The conical surface in the grooves makes the rings expand when an attempt is made to pull the tubes apart, whereby the rings are stuck in the second tube while the first tube is moved slightly.

### The invention.

By the present invention an externally cylindrical member as disclosed introductorily has been provided, on which at least one springy member is situated in the deepest axial end of the groove, in order to press the expansion member towards the shallower part of the groove. Thereby, the expansion member will be brought to a portion of the groove having an increased diameter relatively to the deepest of the groove.

On its inside the expansion member may have a corresponding conical surface as the groove. Alternatively, the expansion member may have a differently shaped inner surface, for instance a surface being curved in the crosswise direction. At least one outwardly directed gripping edge externally on the expansion membercomes into engagement with the wall in an aperture into which the cylindrical member is inserted. Additionally, a springy member is placed in the deepest end of the groove, for instance an O-ring, a metal washer being wavy in the circumferential direction or one or more Belleville springs.

Thus, upon insertion of the cylindrical member in the aperture the expansion member will be attached to the wall due to the gripping edge or edges being in engagement with the wall. When the cylindrical member is exposed to a large force oppositely of the direction of insertion, the member will be moved slightly, which causes that the expansion member will be situated on a portion of the conical surface having a larger diameter than that on which it was situated upon the insertion, and, consequently, the expansion member will be expanded, whereby the gripping edge or edges will penetrate deeper into the wall, and the attachment is increased. During insertion of the cylindrical member in the aperture the expansion member will normally be situated in the deepest portion of the groove. The springy member will bring the expansion member away from this portion to a portion of the conical surface having a smaller depth; i.e. the expansion member will expand.

The gripping edge or edges may advantageously be inclined oppositely of the direction of insertion of the cylindrical member in the aperture. Thereby, the insertion will be facilitated, because the gripping edge or edges does/do not penetrate into the wall during the insertion. Due to the expansion of the expansion member taking place when an attempt is made to pull the member out of the aperture, the resistance against pulling out will increase by an axial load.

The present invention will be better understood from the following detailed description and the accompanying drawings, which merely constitute illustration, and which, thus, do not restrict the extent of the invention.

Equal reference numerals refer to equal parts.
- Figure 1: shows a diametrical axial section of an expansion member in the form of a ring for use on a cylindrical member according to the present invention.
- Figure 2: shows in an axial section an example of design of a cylindrical member according to the present invention.
- Figure 3: shows in an axial section the cylindrical member of Figure 2 positioned in an adapted aperture in a receiving part.
- Figure 4: shows, correspondingly as Figure 2, an example of design of a cylindrical member according to the invention, having a metallic washer as springy member.
- Figure 5: shows a metallic washer included in the example of Figure 4.
- Figure 6: shows a cylindrical member according to the invention, having two Belleville springs as springy member.
- Figure 7: shows an example of use of the present invention.

### Detailed description of the invention.

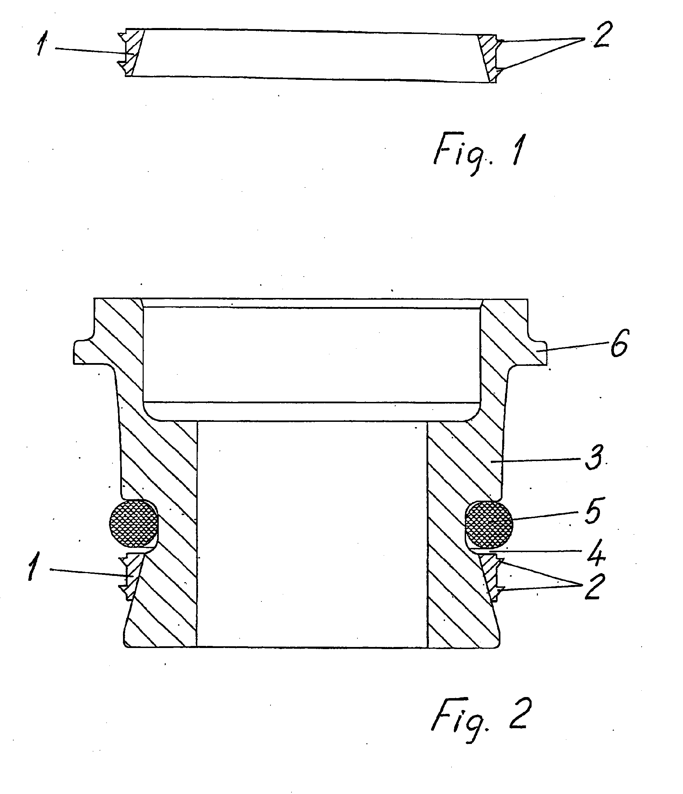

Figure 1 shows an expansion member in the form of a ring 1 having two preferentially sharp gripping edges 2 on the external wall. The internal wall is conical, and is to engage the bottom of a circumferential groove 4 in a cylindrical member 3 (shown in Figures 2 - 4, 6 and 7). The ring 1 is split in order to permit varying of the diameter of the ring. This is necessary in order to place the ring in the groove 4 and to permit compressing of the ring 1 when the cylindrical member 3 is inserted in an aperture, and in order to permit expansion of the ring 1 when it is shifted along the bottom surface of the groove.

Figure 2 shows an example of design of the present invention, in which an externally cylindrical member 3, for instance of plastic, has a groove 4 in which the ring 1 is placed. This groove 4 has a partly conical bottom surface. The bottom surface has an increasing diameter in the direction of insertion of the member 3 in the aperture. The conical inner surface of the ring 1 and the conical bottom surface of the groove 4 in the member 3 are parallel and engage each other. The gripping edges 2 of the ring 1 protrude somewhat out from the member 3 even when the ring 4 is situated innermost in the groove 4. This causes a certain resistance when the member 3 is pushed into the aperture. An O-ring 5 is situated in the deepest end of the groove 4. The groove 4 has a recess in this end, adapted to the O-ring 5. When the member 3 is not inserted in an adapted aperture, the O-ring 5 lies freely around the member 3 and does not press against the ring 1. The member 3 is shown to be shaped with a stop flange 6 situated around one end of the member 3, in order to secure proper positioning of the member in the aperture.

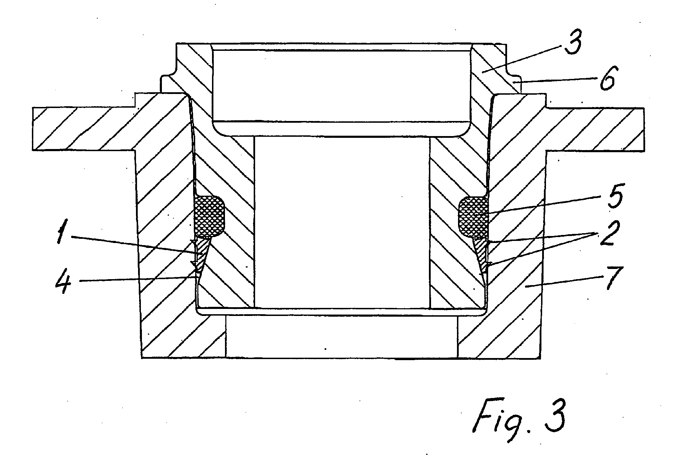

Figure 3 shows the cylindrical member 3 placed in an adapted aperture in a receiving part 7. When the member 3 is inserted in the aperture, the ring 1 is compressed. Because the gripping edges 2 protrude radially outside of the member 3, they will press against the wall of the aperture and come into engagement therewith. Simultaneously, the O-ring 5 will be deformed and press against the ring 1, whereby this is constantly exposed to an axial force, which leads to an expansion of the ring 1 due to the conical bottom surface of the groove 4. If the member 3 is exposed to a force directed oppositely of the direction of insertion, the ring 1 will not move, because the gripping edges 2 are engaging the wall of the aperture. Axial shifting of the member 3 relatively to the aperture causes shifting of the ring 1 in the groove of the member 3, whereby the diameter increases, and the gripping edges 2 will be more firmly engaged in the wall of the aperture. The ring 1 will lock the member 3 in the aperture, since the distance between the member 3 and the wall of the aperture is smaller than the radial thickness of the ring 4. The member 3 is shown shaped with a stop flange 6, correspondingly as shown in Figure 2.

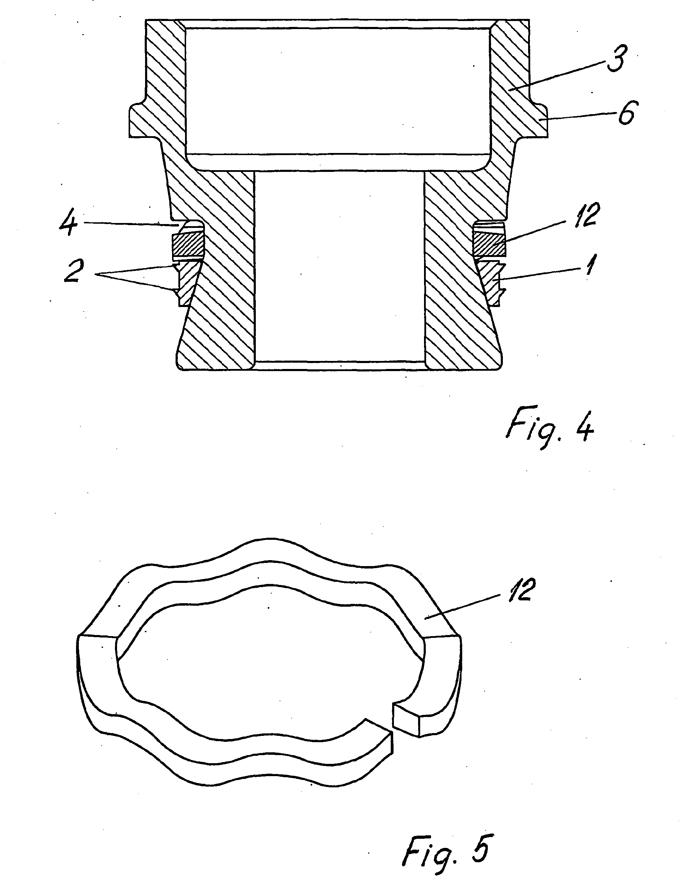

Figure 4 shows the cylindrical member 3 with another springy member than an O-ring, in the form of a metallic ring 12 being wavy in its circumference. The metallic ring 12 will perform the same function as the O-ring 5, i.e. to act on the ring 1 in the axial direction, against the direction of insertion in an aperture. Here, the groove 4 for the ring 1 has a cylindrical bottom in the region where the metallic ring 12 is situated. The member 3 is shown shaped with a stop flange 6, correspondingsly as shown in the Figures 2 and 3.

Figure 5 shows the metallic ring 12 shown in section in Figure 4. As it appears, the metallic ring 12 is wavy in the circumferential direction and split.

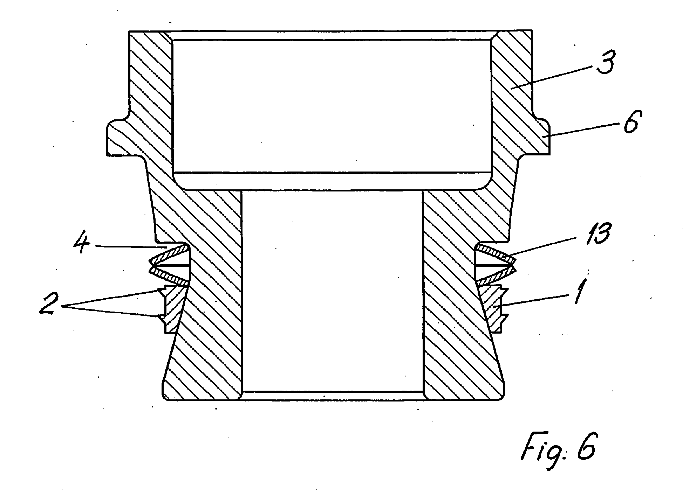

Figure 6 shows the cylindrical member 3 with a springy member in the form of a stack of Belleville springs 13, here shown with two such springs. Of course, more than two springs may be used. The Belleville springs 13 will perform the same function as the O-ring 5 and the wavy metallic ring 12, i.e. to act on the ring 1 in the axial direction, against the direction of insertion in an aperture. The member 3 is shown shaped with a stop flange 6, correspondingsly as shown in the Figures 2, 3 and 4.

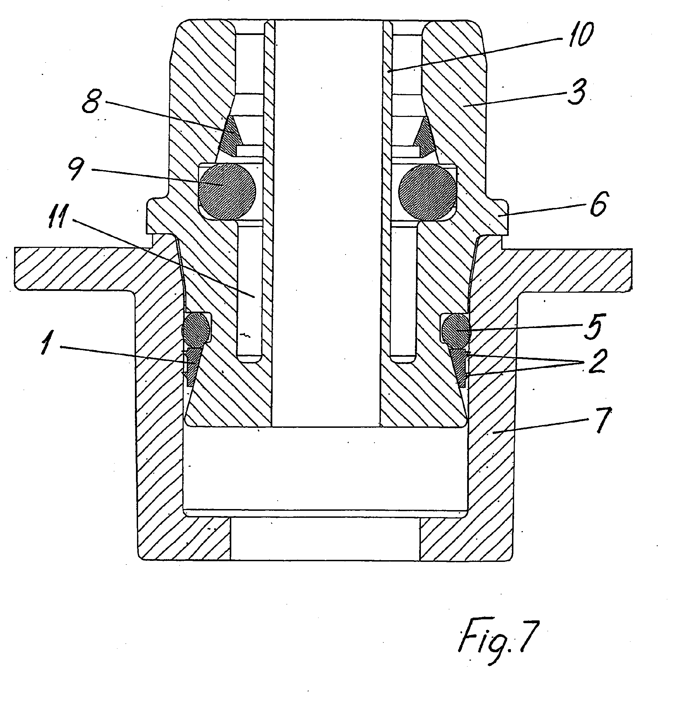

Figure 7 shows an example of use of the invention. Here, a cylindrical member 3 is shaped as a coupling housing, and contains a clamping ring 8 for retaining of a tube or hose inserted in the member 3. An O-ring 9 has been inserted in order to seal around the inserted tube or hose. The member 3 is shaped with an internal supporting sleeve 10, onto which the tube or hose is run, and the supporting sleeve 10 prevents radial compression of the tube or hose when it is exposed to pressure from the clamping ring 8. The end of the tube or hose can be run into an annular space 11 in the member 3.

In other respects the member 3 is shaped nearly as shown in Figure 3, by having an external groove containing an O-ring 5 and a ring 1 having external gripping edges 2.

It will be understood that a metallic ring as shown in Figure 4 and 5, Belleville springs as shown in Figure 6 or other springy members causing an axial force against the ring 1 may be used instead of the O-ring 5 in the example shown in Figure 7.

The cylindrical member 3 is shown inserted in a receiving part 7, and the mode of operation is the same as explained in connection with Figure 3. The member 3 has an external stop flange 6 which determines the inserted position of the member 3 in the receiving part 7.

The ring 1 may be made of metal or a metal alloy, or possibly of another hard material. A condition is that the gripping edge or edges 2 shall be able to cut into the wall of the aperture of the receiving part 7 in which the member 3 is inserted. Thus, the necessary hardness depends on the hardness of the wall which defines the aperture. If the hardness of the wall is low, then also the ring may have a relatively low hardness.

The cylindrical member 3 may be made of a variety of materials, such as plastic, rubber or a metal/a metal alloy having a lower hardness than the expansion member (the ring) 1.

The cylindrical member 3 may be solid or hollow.

The receiving part 7 having an aperture for insertion of the cylindrical member 3 may in the principle be any kind of receiving part in which another member is to be retained. The receiving part does not need to be more or less sleeve shaped, as it may be for instance a block or a plate.

## Claims

1. An externally cylindrical member (3) for fastening in an aperture in a receiving part (7) into which the cylindrical member is inserted, whereby at least one expansion member (1) having at least one external gripping edge (2) is situated in a circumferential groove (4) in the cylindrical member (3), said groove (4) having a bottom surface with an increasing diameter in the direction of insertion of the cylindrical member (3), **characterized in that** at least one springy member (5; 12; 13) is situated in the deepest axial end of the groove (4), in order to press the expansion member (1) towards the shallower part of the groove (4).

2. A member (3) as defined in claim 1, where the expansion member (1) is a split ring.

3. A member (3) as defined in claim 1 or 2, where the expansion member (1) is a ring of plastic or metal.

4. A member (3) as defined in any of the claims 1-3, where the springy member is an elastomeric ring, such as an O-ring (5).

5. A member (3) as defined in any of the claims 1 - 3, where the springy member is a ring (12) designed for a springy function.

6. A member (3) as defined in claim 5, where the ring (12) is wavy in the circumferential direction.

7. A member (3) as defined in any of the claims 1 - 3, where the springy member is a Belleville spring (13) or a stack of such springs.

8. A member (3) as defined in any of the claims 1 - 7, where the expansion member (1) on its internal side has a conical surface for abutting the bottom surface of the groove (4) in the cylindrical member (3).

9. A member (3) as defined in any of the claims 1 - 7, where the expansion member (1) on its internal side has a curved surface for abutting the bottom surface of the groove (4) in the cylindrical member (3).

10. A member (3) as defined in any of the claims 1 - 9, and shaped as a coupling housing containing a clamping ring for a tube or a hose inserted in the coupling housing.

## Patentansprüche

1. Außenzylindrisches Element (3) zum Befestigen in einer Öffnung in einem Aufnahmeteil (7), in welches das zylindrische Element eingesetzt ist, wobei mindestens ein Ausdehnungselement (1), das mindestens einen äußeren Greifrand (2) hat, in einer Umfangsnut (4) in dem zylindrischen Element (3) angeordnet ist, wobei die Nut (4) eine Bodenfläche mit einem zunehmenden Durchmesser in der Einsetzrichtung des zylindrischen Elements (3) hat,
**dadurch gekennzeichnet, dass** sich mindestens ein federndes Element (5; 12; 13) in dem tiefsten axialen Ende der Nut (4) befindet, um das Ausdehnungselement (1) zu dem flacheren Teil der Nut (4) hin zu drücken.

2. Element (3) nach Anspruch 1, wobei das Ausdehnungselement (1) ein Spaltring ist.

3. Element (3) nach Anspruch 1 oder 2, wobei das Ausdehnungselement (1) ein Ring aus Kunststoff oder Metall ist.

4. Element (3) nach einem der Ansprüche 1 bis 3, wobei das federnde Element ein elastomerer Ring wie etwa ein O-Dichtring (5) ist.

5. Element (3) nach einem der Ansprüche 1 bis 3, wobei das federnde Element ein Ring (12) ist, der für eine federnde Funktion ausgebildet ist.

6. Element (3) nach Anspruch 5, wobei der Ring (12) in der Umfangsrichtung wellig ist.

7. Element (3) nach einem der Ansprüche 1 bis 3, wobei das federnde Element eine Tellerfeder (13) oder ein Stapel solcher Federn ist.

8. Element (3) nach einem der Ansprüche 1 bis 7, wobei das Ausdehnungselement (1) an seiner Innenseite eine konische Oberfläche zur Anlage an der Bodenfläche der Nut (4) in dem zylindrischen Element (3) hat.

9. Element (3) nach einem der Ansprüche 1 bis 7, wobei das Ausdehnungselement (1) an seiner Innenseite eine gekrümmte Oberfläche zur Anlage an der Bodenfläche der Nut (4) in dem zylindrischen Element (3) hat.

10. Element (3) nach einem der Ansprüche 1 bis 9, das als ein Kupplungsgehäuse geformt ist, das einen Klemmring für ein Rohr oder einen Schlauch enthält, der in das Kupplungsgehäuse eingesetzt ist.

## Revendications

1. Élément cylindrique externe (3) à fixer dans une ouverture dans une pièce de réception (7) dans laquelle l'élément cylindrique est inséré, moyennant quoi au moins un élément de dilatation (1) comprenant au moins un bord extérieur de préhension (2) est situé dans une rainure circonférentielle (4) dans l'élément cylindrique (3), ladite rainure (4) comprenant une surface inférieure dont le diamètre augmente dans le sens de l'insertion de l'élément cylindrique (3), **caractérisé en ce qu'**au moins un élément de ressort (5, 12, 13) est situé dans l'extrémité axiale la plus profonde de la rainure (4), afin d'appuyer sur l'élément de dilatation (1) vers la partie la moins profonde de la rainure (4).

2. Élément (3) selon la revendication 1, dans lequel l'élément de dilatation (1) est une bague fendue.

3. Élément (3) selon la revendication 1 ou 2, dans lequel l'élément de dilatation (1) est une bague en plastique ou en métal.

4. Élément (3) selon l'une quelconque des revendications 1 à 3, dans lequel l'élément de ressort est une bague élastomère, telle qu'un joint torique (5).

5. Élément (3) selon l'une quelconque des revendications 1 à 3, dans lequel l'élément de ressort est une bague (12) conçue pour avoir une fonction de ressort.

6. Élément (3) selon la revendication 5, dans lequel la bague (12) est ondulée dans le sens circonférentiel.

7. Élément (3) selon l'une quelconque des revendications 1 à 3, dans lequel l'élément de ressort est un ressort Belleville (13) ou une pile de ces ressorts.

8. Élément (3) selon l'une quelconque des revendications 1 à 7, dans lequel l'élément de dilatation (1) comprend sur son côté intérieur une surface conique pour entrer en butée avec la surface inférieure de la rainure (4) dans l'élément cylindrique (3).

9. Élément (3) selon l'une quelconque des revendications 1 à 7, dans lequel l'élément de dilatation (1) comprend sur son côté intérieur une surface incurvée pour entrer en butée avec la surface inférieure de la rainure (4) dans l'élément cylindrique (3).

10. Élément (3) selon l'une quelconque des revendications 1 à 9, et formé comme un logement d'accouplement contenant une bague de serrage pour un tube ou un tuyau inséré dans le logement d'accouplement.
